# EUROPÄISCHE PATENTSCHRIFT

(11) **EP 1 166 937 B1**
(45) Veröffentlichungstag und Bekanntmachung des Hinweises auf die Patenterteilung: **31.08.2005**
(21) Anmeldenummer: 01114965.5
(22) Anmeldetag: 20.06.2001
(51) Int. Cl.: B23K 1/00

(54) **Verfahren zur Instandsetzung von metallischen Bauteilen**
Reparing method of metallic elements
Méthode de réparation d'éléments métalliques

(30) Priorität: 23.06.2000 DE 10030776
(43) Veröffentlichungstag der Anmeldung: 02.01.2002
(73) Patentinhaber: MTU Aero Engines GmbH, 80995 München (DE)
(72) Erfinder: Meier, Reinhold, 84405 Dorfen (DE)

(56) Entgegenhaltungen:
- EP-A- 0 592 179
- US-A- 4 826 071
- US-A- 5 914 055
- PATENT ABSTRACTS OF JAPAN Bd. 0081, Nr. 95 (M-323), 7. September 1984 (1984-09-07) & JP 59 085369 A (KAWASAKI SEITETSU KK; others: 01), 17. Mai 1984 (1984-05-17)

## Beschreibung

Die Erfindung betrifft ein Verfahren zur Instandsetzung von metallischen Bauteilen, insbesondere für Gasturbinen, mit mechanisch lastaufnehmenden öffenen Nuten, gemäß dem Oberbegriff des Patentanspruches 1 (siehe, z.B., US-A- 5 914 055).
Lastaufnehmende Nuten in metallischen Bauteilen wirken in der Regel formschlüssig mit weiteren, in die Nuten eingreifenden Bauteilen zusammen. Meist sind die Paarungen nicht spielfrei und lassen Relativbewegungen zu. Daher treten nach einer gewissen Betriebsdauer u.U. Schädigungen durch plastische Verformung, Reibkorrosion, Reibverschleiß, Risse, Abplatzen etc. auf, welche in aller Regel mit einer zumindest lokalen Aufweitung des Nutquerschnitts über die Sollkontur hinaus verbunden sind. Bei hohen Bauteiltemperaturen, wie sie insbesondere in Gasturbinen auftreten, verschlechtern sich die mechanischen Eigenschaften metallischer Werkstoffe erheblich, so dass derartige Schädigungen schneller bzw. in verstärkter Form auftreten. Um nicht das gesamte, jeweilige Bauteil erneuern zu müssen, wird angestrebt, gezielt die Nut oder Nuten instandzusetzen. Hierfür sind verschiedene Verfahren in Anwendung bzw. in Erprobung, deren Gemeinsamkeiten darin bestehen, dass Werkstoff schichtartig auf die beschädigten und somit nicht mehr maßhaltigen Oberflächen der Nut mit gewissem Übermaß aufgetragen und anschließend beim Bearbeiten auf Maß teilweise wieder abgetragen wird. Als Beschichtungsverfahren kommen das Metallspritzen, das galvanische Beschichten oder das Auftragschweißen zur Anwendung. Da in der Regel die Nutseitenflächen beschädigt sind, welche sich in geringem Abstand gegenüberstehen und sich praktisch gegenseitig "abschatten", ist es schwierig bis unmöglich, hier einen ausreichenden, gleichmäßigen Werkstoffauftrag zu erzielen.

Demgegenüber besteht die Aufgabe der Erfindung darin, ein Verfahren zur Instandsetzung von metallischen Bauteilen mit beschädigten bzw. nicht mehr maßhaltigen Nuten anzugeben, das auf relativ einfache, schnelle und zuverlässige Weise die Wiederherstellung des Sollzustandes ermöglicht, und zwar bezüglich der Werkstoffeigenschaften und der Geometrie einschließlich der Oberflächenqualität. Eine Einschränkung ist insofern gegeben, als bei jeder der Nuten die bauteiloberflächenseitigen Längskanten zumindest weitgehend in einer Ebene liegen sollen. Anders ausgedrückt, sollen sich die von der Bauteiloberfläche gebildeten, unmittelbaren Nutränder möglichst auf einem Niveau befinden, wobei der Nutgrund zumeist auch eben und zu diesem Niveau parallel sein wird.

Die genannte Aufgabe wird durch die in Anspruch 1 gekennzeichneten Merkmale gelöst, in Verbindung mit den gattungsbildenden Merkmalen in dessen Oberbegriff. Erfindungsgemäß werden zunächst die Nutoberflächen mit einem nicht-oxidischen Strahlmittel gereinigt und aktiviert. Dann wird die Nut erforderlichenfalls an den Enden durch Schweißen verschlossen, so dass praktisch eine nach oben offene Gießform entsteht. Als nächstes wird die Nut mit einem Hochtemperaturlot in Pulverform, das dem Bauteilwerkstoff sehr ähnlich bzw. teilweise mit diesem identisch ist, aufgefüllt und über den Nutquerschnitt hinaus überfüllt. Das überstehende Pulvervolumen soll dabei dem Leervolumenanteil der gesamten Pulvermenge je Nut entsprechen. Nach dem anschließenden Erhitzen und Verflüssigen des Lotes im Vakuum ist die Nut randvoll mit blasenfreiem, flüssigem Metall gefüllt, wobei bedarfsweise nichtgeschmolzene Metall- oder Keramikpartikel bzw. Metallkörper als Zusatz enthalten sein können. Nach metallurgischer Verbindung von Lot und Bauteil sowie Abkühlung und vollständiger Erstarrung im Vakuum wird die Nut auf Sollmaß fertigbearbeitet, wobei ein Großteil des Lotes und des endseitigen Schweißmaterials durch Abtragen wieder entfernt wird. Das abgetragene Material ist recyclebar und somit nicht verloren.

In den Unteransprüchen sind bevorzugte Ausgestaltungen des Verfahrens gekennzeichnet.

Die Erfindung wird anschließend anhand der Zeichnungen noch näher erläutert. Dabei zeigen in vereinfachter, nicht maßstäblicher Darstellung:
Figur 1 einen Querschnitt durch eine Nut mit abgenutzten Seitenwänden,
Figur 2 einen Teil-Längsschnitt durch die Nut im Bereich eines Nutendes,
Figur 3 einen Querschnitt wie in Figur 1 durch die über ihre Oberfläche hinaus mit Lotpulver gefüllte Nut,
Figur 4 einen Querschnitt wie in Figur 3 nach dem Schmelzen und Erstarren des Lotes, und
Figur 5 einen Querschnitt wie in Figur 4 nach Endbearbeitung der Nut auf Sollkontur.

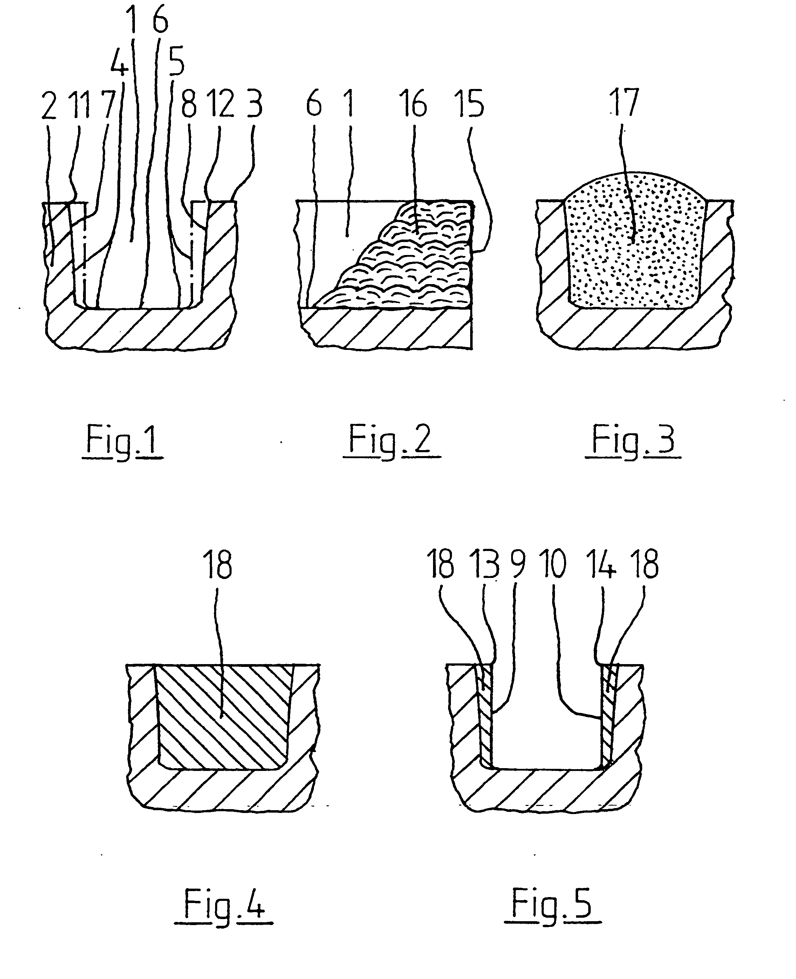

Die an der Oberfläche 3 eines Bauteils 2 offene Nut 1 weist abgenutzte Seitenflächen 7, 8 auf, wohingegen der Nutgrund 6 sich noch in gutem Zustand sowie in Solllage befindet. Die Sollkontur 5 der Nut 1 ist in Figur 1 strichpunktiert wiedergegeben, sie stimmt am Nutgrund 6 mit der Istkontur 4 überein. Die Seitenflächen 7,8 enden an der Bauteiloberfläche 3 in Längskanten 11,12. Die Nut 1 kann in Längsrichtung gerade und/oder gekrümmt sein, wobei es für die Anwendbarkeit der Erfindung erforderlich ist, dass die an der Bauteiloberfläche 3 vorhandenen Längskanten 11,12 bzw. 13,14 zumindest in guter Näherung in einer Ebene liegen. In der Regel wird der Nutgrund 6 dabei auch eben und zu besagter Ebene parallel sein. Somit geht es primär um ebene Nuten in gerader bzw. gekrümmter Ausführung, wobei die Nut auch ringförmig in sich geschlossen sein kann. Ein Beispiel hierfür wäre eine durch Einstechdrehen an der Stirnfläche eines dabei rotierenden Bauteils hergestellte Nut. In den vorliegenden Figuren ist der Einfachheit halber eine gerade Nut 1 dargestellt. Die durch Abnutzung aufgeweitete Nut 1 gemäß Figur 1 wird in einem ersten Arbeitsschritt mit einem nicht-oxidischen Strahlmittel, z.B. mit Siliziumkarbid, gereinigt und aktiviert, so dass ihre Oberflächen 6,7,8 in einem leicht aufgerauhten, metallisch blanken Zustand ohne Oxidschichten vorliegen, um einen optimalen Haftgrund für eine metallische Beschichtung zu bilden. Dies ist dem Fachmann geläufig und daher nicht gesondert dargestellt.

Figur 2 zeigt einen Teil-Längsschnitt durch besagte Nut 1. Das zunächst offene Nutende 15 ist hier bereits durch einen lokalen, den gesamten Nutendquerschnitt ausfüllenden Schweißauftrag 16 verschlossen. Der Schweißwerkstoff ist mit dem Bauteilwerkstoff zumindest basisgleich, z.B. auf Ti-, Fe- oder Ni-Basis (Titan-, Eisen- oder Nickelbasis), oder vorzugsweise identisch. Falls die Nut 1 noch ein weiteres, offenes Ende aufweist, wird dieses in gleicher Weise verschlossen.

Figur 3 zeigt die Nut 1 wieder im Querschnitt, wobei diese bis über ihre Oberkante hinaus mit Lotpulver 17 befüllt ist. Das Lotpulver 17 stimmt hinsichtlich seiner Legierungszusammensetzung weitestgehend mit dem Bauteilwerkstoff überein, es ist jedoch durch mindestens ein weiteres Element wie Bor oder Silizium in seinem Schmelzpunkt herabgesetzt. Auf diese Weise kann das Lot verflüssigt werden, ohne den Bauteilwerkstoff aufzuschmelzen. Das Lotpulver 17 kann beispielsweise zur Hälfte aus mit dem Bauteilwerkstoff identischem Legierungspulver, zur andere Hälfte aus schmelzpunktreduziertem Legierungspulver mit B- oder Si-Zusatz gemischt sein. Weiterhin können verschleißmindernde, d.h. in Relation zum Bauteilwerkstoff härtere bzw. abriebfestere Partikel metallischer bzw. keramischer Art und/oder füllende Metallkörper zur Reduzierung der Lotpulvermenge zugemischt sein. Es ist zu berücksichtigen, dass das Lotpulver 17 einen gewissen Leervolumenanteil enthält. Durch "Überfüllen" der Nut 1 wird das Lotpulvervolumen - einschließlich Zusatzmaterialso bemessen, dass es dem Nutvolumen plus dem Leervolumenanteil des Lotpulvers 17 entspricht. Anders ausgedrückt soll das Lot-Nettovolumen - ohne Leervolumenanteil - dem Nutvolumen entsprechen. Ggf. vorhandenes Zusatzmaterial ist in der Figur nicht wiedergegeben.

Figur 4 zeigt im Querschnitt den Zustand nach dem Aufschmelzen und Erstarren des Lotes 18. Die Nut ist vollständig mit massivem Werkstoff gefüllt, der metallurgisch mit dem Bauteilwerkstoff verbunden ist. Da das Lot 18 zunächst in flüssiger Form vorliegt, leuchtet es ein, dass die Nut 1 endseitig verschlossen sein muss und in einer horizontal positionierbaren Ebene liegende Längsoberkanten aufweisen muss. Andernfalls wäre die Nut nicht vollständig mit Flüssigkeit befüllbar, zumindest ein Teil des verflüssigten Lotes würde herauslaufen. Ausgehend von dem Zustand gemäß Figur 4 mit erstarrtem Lot 18 kann als weiterer Verfahrensschritt eine Glühbehandlung unter Vakuum oder in sauerstoffreduzierender Atmosphäre, z.B. in Fluorwasserstoff, durchgeführt werden. Ziel dabei ist, das schmelzpunktsenkende Element Bor oder Silizium durch Diffusion in den Bauteilwerkstoff aus dem Nutwandbereich zu entfernen, um nachteilige Versprödungseffekte zu vermeiden. Auch dieser vorteilhafte Verfahrensschritt bedarf keiner separaten Darstellung.

Figur 5 schließlich zeigt den auf Sollkontur endbearbeiteten, d.h. instandgesetzten Zustand der Nut 1 im Querschnitt. Man erkennt, dass ein Großteil des Lotes 18 durch Abtragen entfernt wurde, beispielsweise mittels Stoßen, Räumen, Fräsen, Drehen und/oder Schleifen. Die vom Lot 18 gebildeten Seitenflächen 9,10 entsprechen der Sollkontur 5 in Figur 1, im Bereich des noch intakten Nutgrundes 6 wurde das Lot 18 vollständig entfernt. Im Falle eines lokalen Werkstoffdefizits in diesem Bereich kann selbstverständlich auch hier Lot verbleiben. Die seitlichen Lotschichten reichen bis an die Bauteiloberfläche 3 und beinhalten die oberen Längskanten 13,14 der Nut 1. Durch die obengenannte Glühbehandlung mit Wegdiffundieren der schmelzpunktreduzierenden Elemente sind die Lotschichten auch hinsichtlich ihrer Wärmestandfestigkeit bestmöglich an den Bauteilwerkstoff angepasst, d.h., sie haben ihre Loteigenschaft praktisch verloren und sind weitestgehend bauteilwerkstoffidentisch.

## Patentansprüche

1. Verfahren zur Instandsetzung von metallischen Bauteilen, insbesondere für Gasturbinen, mit mechanisch lastaufnehmenden öffenen Nuten, deren an der Bauteiloberfläche vorhandene Längskanten zumindest weitgehend in einer Ebene liegen, und deren Istkontur zumindest örtlich nach Abtragen und/oder Verdrängen des Bauteilwerkstoffs von der Sollkontur abweicht, durch Aufbringen eines zumindest vorwiegend metallischen Zusatzwerkstoffes auf die Nut-Istkontur sowie durch abtragendes Bearbeiten auf die Sollkontur, **gekennzeichnet durch** folgende Verfahrensschritte je Nut:
A) Mechanisches Strahlen der Nutflächen (6,7,8) mit einem nicht-oxidischen Strahlmittel,
B) Verschließen offener Nutenden (15) **durch** Auftragschweißen (16) eines relativ zum Bauteilwerkstoff basisgleichen Schweißwerkstoffes,
C) Auffüllen der endseitig verschlossenen Nut (1) mit einem relativ zum Bauteilwerkstoff basisgleichen, jedoch bei niedrigerer Temperatur schmelzenden Lotpulver (17) ohne oder mit verschleißminderndem und/oder füllendem Zusatzmaterial, wobei der Leervolumenanteil des Lotpulvers (17) ohne oder mit Zusatzmaterial **durch** dessen Aufhäufen über die Nutoberfläche hinaus ausgeglichen wird.
D) Erhitzen des Lotpulvers (17) im Vakuum bis zur Verflüssigung und metallurgischen Verbindung mit dem Bauteilwerkstoff, wobei die Nut (1) in horizontaler, nach oben offener Lage gehalten wird, sowie Abkühlen und Erstarren im Vakuum, und
E) Bearbeiten auf Sollkontur (5) **durch** weitgehendes Abtragen des erstarrten Lotes (18).

2. Verfahren nach Anspruch 1, **dadurch gekennzeichnet, dass** als Strahlmittel Siliziumkarbid (SiC) verwendet wird, und dass nach dem Strahlen bedarfsweise ein Glühen in sauerstoffreduzierender Atmosphäre, z.B. in Fluorwasserstoff, durchgeführt wird.

3. Verfahren nach Anspruch 1 oder 2, **dadurch gekennzeichnet, dass** das Lotpulver (17) - abgesehen von einem möglichen Zusatzmaterial - weitgehend mit dem Bauteilwerkstoff identisch ist und Bor (B) oder Silizium (Si) als schmelzpunktsenkendes Element enthält, wobei maximal etwa die Hälfte des Lotpulvers (17) aus reinem Bauteilwerkstoffpulver ohne schmelzpunktsenkende Elemente bestehen kann.

4. Verfahren nach einem der Ansprüche 1 bis 3, **dadurch gekennzeichnet, dass** dem Lotpulver (17) als Zusatzmaterial verschleißmindernde Metall- bzw. Keramikteilchen und/oder füllende, zum Bauteilwerkstoff basisgleiche Metallkörper, z.B. Kugeln oder Drähte, zugegeben werden.

5. Verfahren nach einem der Ansprüche 1 bis 4, **dadurch gekennzeichnet, dass** nach dem Verflüssigen und Erstarren des Lotes (18) in der Nut (1) eine Glühbehandlung im Vakuum erfolgt.

6. Verfahren nach einem der Ansprüche 1 bis 5, **dadurch gekennzeichnet, dass** das Bearbeiten auf Sollkontur (5) spanabhebend erfolgt, z.B. durch Räumen, Stoßen, Drehen, Fräsen und/oder Schleifen.

## Claims

1. Method for repairing metal components, in particular for gas turbines, with mechanically load bearing open grooves whose lengthwise edges on the component upper surface lie at least extensively in a plane and whose actual contour deviates from the proper contour at least locally after removal and / or displacement of the component material, through application of an at least predominantly metal additional material to the actual contour of the groove and through skimming processing to the proper contour, **characterised by** the following steps of the method for each groove:
A) Mechanical blasting of the groove areas (6, 7, 8) with a non-oxidic blast medium,
B) Sealing of open groove ends (15) through hard-facing by welding (16) of a welding material having the same base relative to the component material,
C) Filling of the groove (1) sealed at the ends with a solder powder (17) having the same base relative to the component material but melting at a lower temperature, without or with wear and tear reducing and / or filling additional material wherein the empty volume proportion of the solder powder (17) is compensated for without or with additional material through piling up beyond the upper surface of the groove.
D) Heating of the solder powder (17) in a vacuum until fluidification and metallurgical connection with the component material wherein the groove (1) is held in a horizontal upwardly open position, and also cooling and setting in a vacuum, and
E) Processing to the proper contour (5) by extensive skimming of the solder (18) which has set.

2. Method according to Claim 1, **characterised in that** silicon carbide (SiC) is used as a blast medium and that after blasting annealing is carried out, if required, in an oxygen reducing atmosphere, e.g. in fluoro-hydrogen.

3. Method according to Claim 1 or 2, **characterised in that** the solder powder (17) - apart from a possible additional material - is extensively identical to the component material and contains boron (B) or silicon (Si) as an element reducing the melting point wherein as a maximum around half of the solder powder (17) can consist of pure component material powder without elements reducing the melting point.

4. Method according to one of the Claims 1 to 3, **characterised in that** wear and tear-reducing metal or ceramic particles and / or filling metal bodies having the same base as the component material, e.g. balls or wires, are added to the solder powder (17) as an additional material.

5. Method according to one of the Claims 1 to 4, **characterised in that** after the solder (18) has been fluidified and set in the groove (1) annealing takes place in a vacuum.

6. Method according to one of the Claims 1 to 5, **characterised in that** processing to the proper contour (5) takes place by machining, e.g. by means of broaching, shaping, turning, milling and / or grinding.

## Revendications

1. Procédé pour réparer des pièces métalliques, en particulier pour turbines à gaz, présentant des rainures ouvertes qui absorbent mécaniquement des contraintes, dont les côtés longitudinaux situés au niveau de la surface de la pièce se trouvent au moins en majeure partie dans un même plan et dont le profil réel s'écarte au moins localement du profil de consigne à la suite d'un enlèvement et/ou refoulement de la matière de la pièce, consistant à déposer une matière d'apport au moins en majeure partie métallique sur le profil réel de la rainure et à l'usiner pour ramener au profil de consigne,
**caractérisé par**
les étapes de procédé suivantes, pour chaque rainure :
A) on grenaille mécaniquement les surfaces de la rainure (6, 7, 8) avec un agent de grenaillage non oxydant,
B) on obture les extrémités ouvertes (15) de la rainure en apportant par soudage (16) une matière de soudure ayant la même base que la matière de la pièce,
C) on remplit la rainure (1) obturée à ses extrémités avec une poudre de brasure (17) ayant la même base que la matière de la pièce mais fondant à une température plus basse, sans ou avec matière d'apport réduisant l'usure et/ou formant charge, le volume vide de la poudre de brasure (17) étant compensé, avec ou sans matière d'apport, en élevant le tas de poudre au-dessus de la surface de la rainure,
D) on chauffe la poudre de brasure (17) sous vide jusqu'à ce qu'elle soit liquéfiée et réunie à la matière de la pièce par une liaison métallurgique, la rainure (1) étant alors tenue dans une position horizontale, avec l'ouverture vers le haut, et on la refroidit et fait durcir sous vide, et
E) on usine jusqu'au profil de consigne (5) en enlevant une grande partie de la brasure durcie (18).

2. Procédé selon la revendication 1,
**caractérisé en ce qu'**
on utilise du carbure de silicium (SiC) comme agent de grenaillage, et après le grenaillage, on exécute si nécessaire un recuit dans une atmosphère réductrice d'oxygène, par exemple dans du fluorure d'hydrogène.

3. Procédé selon la revendication 1 ou 2,
**caractérisé en ce que**
la poudre de brasure (17) est dans une large mesure identique à la matière de la pièce - à l'exception d'une possible matière additive - et contient du bore (B) ou du silicium (Si) comme élément d'abaissement du point de fusion, la poudre de brasure (17) pouvant être composée au maximum à peu près pour moitié d'une poudre exclusivement composée de matière de la pièce sans éléments d'abaissement du point de fusion.

4. Procédé selon une des revendications 1 à 3,
**caractérisé en ce que**
comme matière additive on ajoute à la poudre de brasure (17), des particules de métal ou de céramique réduisant l'usure et/ou des corps métalliques de charge, par exemple des billes ou fils, ayant la même base que la matière de la pièce.

5. Procédé selon une des revendications 1 à 4,
**caractérisé en ce qu'**
après la liquéfaction et le durcissement de la brasure (18) dans la rainure (1), on effectue un traitement de recuit sous vide.

6. Procédé selon une des revendications 1 à 5,
**caractérisé en ce que**
l'usinage ramenant au profil de consigne (5) s'effectue par enlèvement de copeaux, par exemple par brochage, mortaisage, tournage, fraisage et/ou meulage.
